# DEMANDE DE BREVET EUROPEEN

(11) **EP 4 729 203 A1**
(43) Date de publication de la demande: **22.04.2026**
(21) Numéro de dépôt: 25209063.4
(22) Date de dépôt: 16.10.2025
(51) Int. Cl.: B21J 15/10, B21J 15/28, B21J 15/04

(54) **ENSEMBLE DE POSE ET PROCÉDÉ DE POSE D'UNE FIXATION**

(30) Priorité: 16.10.2024 FR 2411219
(71) Demandeur: LISI Aerospace, 75012 Paris (FR)
(72) Inventeur: BILLAUD, Dimitri, 95310 SAINT-OUEN-L'AUMÔNE (FR); RENARD, Laurent, 18500 VIGNOUX SUR BARANGEON (FR); BROUCKE, Martial, 95310 SAINT-OUEN L'AUMÔNE (FR)
(74) Mandataire: Lavoix

(57) **Abrégé**

La présente invention concerne un ensemble (10) de pose d'une fixation (12) dans une structure, l'ensemble de pose comprenant un nez (100) de pose, et un outil (200) de pose ; l'ensemble de pose comportant en outre un dispositif d'interface (300), comprenant :
- un corps d'interface (302), comprenant un trou traversant (316) ;
- un ressort (306) de compression, en saillie par rapport au corps d'interface ;
- une tige de contact (308), apte à coulisser dans le trou traversant (316) ;
- une bague d'assemblage (304), assemblée au corps d'interface (302) ;
le corps d'interface étant fixé à l'outil de pose (200) et la bague d'assemblage étant assemblée au nez de pose ; une extrémité avant du ressort (306) étant au contact dudit nez.

L'ensemble de pose est mobile entre deux configurations du dispositif d'interface.

## Description

La présente invention concerne un ensemble de pose d'une fixation dans une structure, l'ensemble de pose comprenant un nez de pose, ledit nez de pose comprenant : un corps creux, s'étendant selon un axe principal, une extrémité arrière du corps creux comprenant une bride ; et un premier élément mobile, reçu dans le corps creux et mobile par rapport audit corps creux ; le premier élément mobile étant apte à coopérer avec la fixation ; l'ensemble de pose comprenant en outre un outil de pose, ledit outil de pose comprenant : un boîtier, comprenant une extrémité avant ouverte et une extrémité arrière, alignées selon l'axe principal ; un deuxième élément mobile, s'étendant dans le boîtier et mobile en rotation et/ou en translation par rapport au boîtier ; le deuxième élément mobile étant assemblé au premier élément mobile, de sorte à entraîner ledit premier élément mobile en translation et/ou en rotation ; un moteur électrique ; un arbre de sortie dudit moteur ; et un circuit électrique relié au moteur ; le circuit électrique comprenant un interrupteur mobile entre un état ouvert et un état fermé ; un dispositif de transmission, reçu dans le boîtier et relié à l'arbre de sortie, le dispositif de transmission étant apte à entraîner en rotation et/ou en translation le deuxième élément mobile sous l'effet d'une rotation de l'arbre de sortie ; et une alimentation électrique du moteur, raccordée au circuit électrique.

La présente invention concerne en particulier l'assemblage de fixations aveugles, notamment dans une structure ne comprenant qu'une face accessible.

Un tel ensemble de pose est notamment décrit dans le document EP3539685, au nom de la Demanderesse.

Le fonctionnement de cet ensemble de pose peut présenter un risque de trouble musculo-squelettique (TMS) pour l'index de l'opérateur car ce dernier doit appuyer sur l'interrupteur mobile - en général, une gâchette disposée sur la poignée - et le relâcher plusieurs fois par minute pour une séquence d'installation de plusieurs fixations.

Afin de résoudre ces problèmes, l'invention a pour objet un ensemble de pose du type précité, comprenant en outre un dispositif d'interface, ledit dispositif d'interface comprenant : un corps d'interface, de forme annulaire disposé selon l'axe principal, le corps d'interface comprenant : une face avant, sensiblement perpendiculaire à l'axe principal ; et un trou traversant, parallèle à l'axe principal et débouchant sur la face avant ; au moins un premier ressort de compression, fixé au corps d'interface et en saillie par rapport à la face avant ; une tige de contact, apte à coulisser dans le trou traversant du corps d'interface et s'étendant entre une extrémité avant et une extrémité arrière, l'extrémité arrière étant apte à actionner l'interrupteur du circuit électrique vers l'état fermé ou vers l'état ouvert ; une bague d'assemblage, assemblée au corps d'interface et disposée selon l'axe principal, la bague d'assemblage comprenant : un épaulement, sensiblement perpendiculaire à l'axe principal ; et une cavité interne, délimitée axialement par ledit épaulement et par la face avant du corps d'interface ; le corps d'interface étant fixé à l'extrémité avant du boîtier de l'outil de pose et la bague d'assemblage étant assemblée à l'extrémité arrière du corps creux du nez de pose ; la bride du corps creux étant reçue dans la cavité interne de la bague d'assemblage ; une extrémité avant du premier ressort étant au contact de ladite bride ; l'ensemble de pose étant configuré de sorte que : dans une première configuration de l'ensemble de pose, la bride du corps creux du nez de pose est au contact de l'épaulement de la bague d'assemblage ; l'extrémité avant de la tige de contact est en saillie axiale par rapport à la face avant du corps d'interface ; le premier ressort est dans un premier état de compression ; et l'interrupteur est ouvert ; et dans une deuxième configuration de l'ensemble de pose, la bride du corps creux du nez de pose est au contact de la face avant du corps d'interface ; l'extrémité avant de la tige de contact est au contact de ladite bride ; le premier ressort est dans un deuxième état de compression, plus comprimé que le premier état ; et l'interrupteur est fermé.

Suivant d'autres aspects avantageux de l'invention, l'ensemble de pose comporte l'une ou plusieurs des caractéristiques suivantes, prises isolément ou suivant toutes les combinaisons techniquement possibles :
- l'extrémité arrière de la tige de contact du dispositif d'interface comprend un bras d'actionnement ; et dans la deuxième configuration, le bras d'actionnement est au contact de l'interrupteur et maintient fermé ledit interrupteur ;
- l'ensemble de pose comprend un deuxième ressort de compression, disposé parallèlement à l'axe principal entre une première et une deuxième extrémités, lesdites première et deuxième extrémités étant fixées respectivement à l'extrémité arrière de la tige de contact et au boîtier de l'outil de pose ; dans un premier état de compression du deuxième ressort, le bras d'actionnement de la tige de contact est à distance de l'interrupteur ; et dans un deuxième état de compression du deuxième ressort, plus comprimé que le premier état, ledit bras d'actionnement est au contact de l'interrupteur, de sorte à maintenir fermé ledit interrupteur ;
- le dispositif d'interface comprend plusieurs premiers ressorts, disposés autour de l'axe principal, chaque premier ressort étant fixé au corps d'interface et en saillie par rapport à la face avant du corps d'interface ;
- l'extrémité avant de la tige de contact comporte un logement taraudé ; et le dispositif d'interface comprend en outre une vis filetée, disposée dans ledit logement, de
sorte que dans la deuxième configuration de l'ensemble de pose, la vis est au contact de la bride du corps creux du nez de pose ;
- la fixation est du type comprenant une tige s'étendant selon un axe de fixation et munie d'une tête ; et une extrémité avant du corps creux du nez de pose comprend : une ouverture avant ; et une lèvre, disposée autour de ladite ouverture avant et apte à entrer en contact avec une surface sensiblement perpendiculaire à l'axe de fixation et disposée autour de la tête de la tige ;
- la fixation est du type comprenant en outre une douille, disposée autour de la tige, ladite douille étant munie d'une collerette apte à entrer en contact avec la tête de la tige, la collerette comprenant une surface d'appui perpendiculaire à l'axe de fixation ; et la lèvre du corps creux est superposable à la surface d'appui de la collerette de la douille ;
- la fixation est du type comprenant en outre un élément de préhension, en saillie axiale par rapport à la tête de la tige ; et l'ouverture avant du corps creux du nez de pose est apte à accueillir ledit élément de préhension ; et le premier élément mobile comprend un dispositif de maintien, apte à saisir l'élément de préhension.

L'invention concerne également un procédé de pose d'une fixation comprenant une tige s'étendant selon un axe de fixation et munie d'une tête, à l'aide d'un ensemble de pose tel que décrit ci-dessus, le procédé comprenant les étapes suivantes : insertion de la tige de la fixation dans un perçage d'une structure, ledit perçage débouchant sur une face accessible de ladite structure, la tête de la tige étant disposée du côté de ladite face accessible ; appui axial de la lèvre du corps creux du nez de pose contre la structure ; et engagement du premier élément mobile du nez de pose avec la tige de la fixation ; puis application sur l'outil de pose d'un effort axial vers l'avant, de sorte à faire passer l'ensemble de pose de la première configuration à la deuxième configuration ; puis fonctionnement du moteur de l'outil de pose, de sorte à entraîner en rotation l'arbre de sortie, les premier et deuxième éléments mobiles étant ainsi entraînés en translation et/ou en rotation ; puis arrêt de l'effort axial vers l'avant sur l'outil de pose, de sorte à faire passer l'ensemble de pose de la deuxième configuration à la première configuration.

Suivant d'autres aspects avantageux de l'invention, le procédé de pose comporte l'une ou plusieurs des caractéristiques suivantes, prises isolément ou suivant toutes les combinaisons techniquement possibles :
- la douille de la fixation est insérée dans le perçage de la structure simultanément à la tige ; et lors de l'appui axial de la lèvre du corps creux du nez de pose contre la structure, ladite lèvre du corps creux est au contact de la surface d'appui de la collerette de la douille ;
- l'engagement du premier élément mobile du nez de pose avec la fixation comprend la saisie, par le dispositif de maintien du premier élément mobile, de l'élément de préhension de la fixation.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue latérale d'un ensemble de pose selon un mode de réalisation de l'invention ;
[Fig 2] [Fig 3] les figures 2 et 3 sont des vues partielles, en coupe, de l'ensemble de pose de la figure 1 ;
[Fig 4] la figure 4 est une vue en coupe d'un nez de pose selon un premier mode de réalisation de l'invention, faisant partie de l'ensemble de pose des figures 1 à 3 ;
[Fig 5] la figure 5 est une vue en coupe d'un nez de pose selon un deuxième mode de réalisation de l'invention ;
[Fig 6] la figure 6 est une vue éclatée du nez de pose de la figure 5 ; et
[Fig 7] la figure 7 est une vue en coupe d'une fixation apte à être posée à l'aide de l'ensemble des figures 1 à 3.

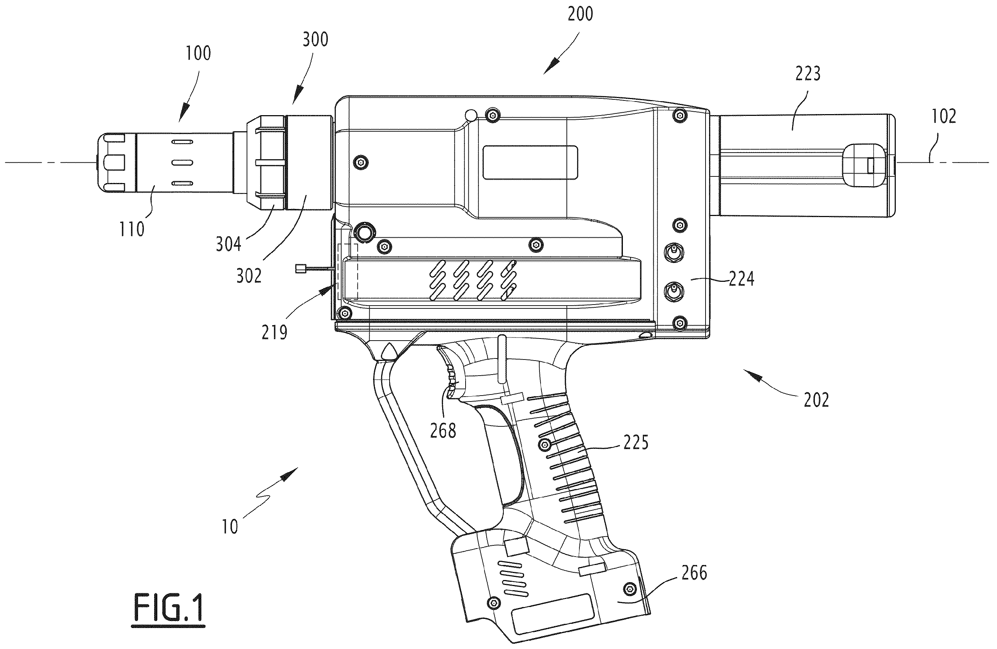

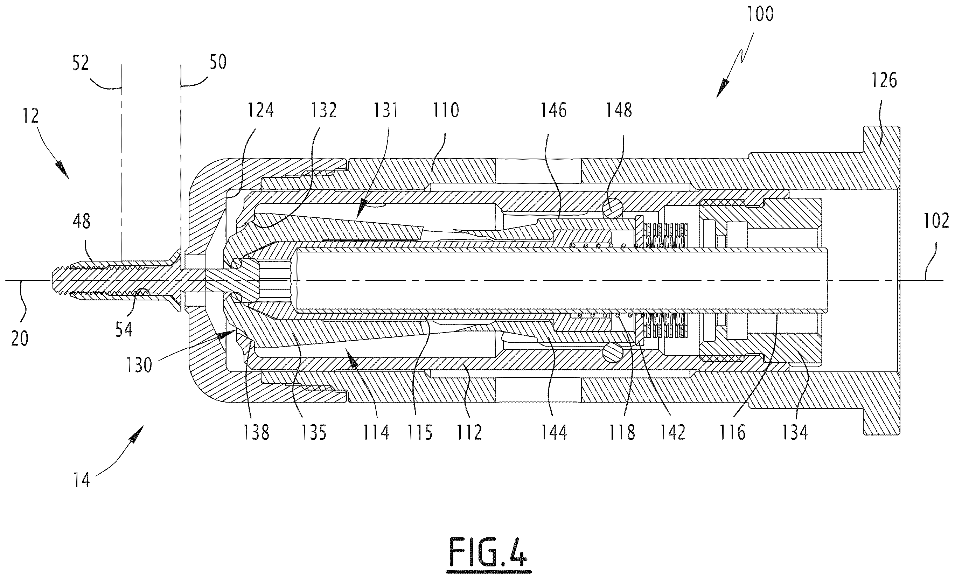

La figure 1 montre un ensemble 10 de pose selon un mode de réalisation de l'invention. L'ensemble 10 est notamment destiné à la pose d'une fixation 12, visible aux figures 1, 4 et 7, dans une structure 14 visible à la figure 4. L'ensemble 10 sera décrit en détail ci-après.

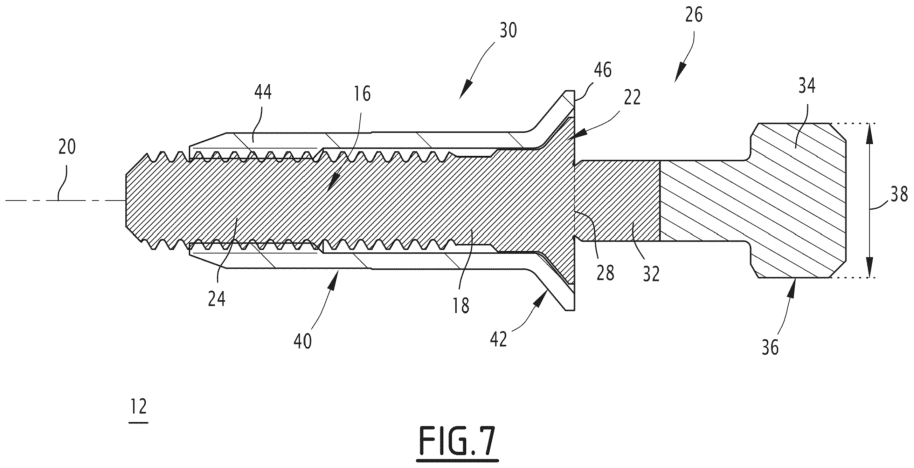

La fixation 12 (figure 7) comporte notamment une tige 16 de fixation, ladite tige 16 comprenant : un fût plein 18, s'étendant selon un axe 20 de fixation ; et une tête 22, disposée à une première extrémité du fût. Dans le mode de réalisation représenté, le fût plein 18 est cylindrique et la tête 22 est fraisée.

Dans le mode de réalisation représenté, la tige 16 de fixation est une vis et comporte en outre une portion filetée 24, alignée avec le fût plein 18 à l'opposé de la tête 22. Dans la suite de la description, la tige 16 de fixation sera dénommée « la vis 16 ».

Dans le mode de réalisation représenté, la fixation 12 comporte en outre : un élément de préhension 26 ; une gorge 28 de rupture ; et une douille 30.

L'élément de préhension 26 est formé d'une pièce avec la vis 16 et comporte : une tige de préhension 32 et un bouton de préhension 34.

La tige de préhension 32 s'étend selon l'axe 20 de fixation, depuis la tête 22 de la vis 16, à l'opposé du fût plein 18.

Le bouton de préhension 34 est disposé à une extrémité de la tige de préhension 32, opposée à la tête 22 de la vis. Le bouton de préhension 34 forme une saillie radiale par rapport à la tige de préhension 32.

De préférence, le bouton de préhension 34 comporte une première surface d'entraînement 36 disposée autour de l'axe 20 de fixation. La première surface d'entraînement 36 comporte par exemple des cannelures parallèles à l'axe 20 de fixation.

L'élément de préhension 26 présente une dimension radiale maximale 38 perpendiculairement à l'axe 20 de fixation. En particulier, la dimension radiale maximale 38 correspond à une dimension radiale du bouton de préhension 34.

La gorge 28 de rupture est ménagée entre la tête 22 de la vis 16 et la tige de préhension 32. Comme il sera décrit ci-après, la gorge 28 de rupture est susceptible d'être rompue sous l'application d'un couple de rupture autour de l'axe 20 de fixation, de sorte à dissocier l'un de l'autre la vis 16 et l'élément de préhension 26.

La douille 30 comprend : un fût tubulaire 40 ; une collerette 42 ; et une portion taraudée 44.

Le fût tubulaire 40 est disposé autour du fût plein 18 de la vis 16 selon l'axe 20 de fixation. La collerette 42, adjacente à une première extrémité dudit fût tubulaire 40, est destinée à entrer en contact avec la tête 22 de la vis. Dans le mode de réalisation représenté, une surface interne de la collerette 42, de forme tronconique, est sensiblement complémentaire d'une surface de la tête 22 fraisée.

La collerette comprend une surface d'appui 46, perpendiculaire à l'axe 20 de fixation et formant une extrémité de ladite collerette.

La portion taraudée 44, adjacente à une seconde extrémité du fût tubulaire 40, est destinée à coopérer avec la portion filetée 24 de la vis.

Dans le mode de réalisation représenté, le fût tubulaire 40 comporte une zone déformable 48 (figure 4), proche de la portion taraudée 44. Comme décrit ci-après, ladite zone déformable 48 est destinée à former un bourrelet radial lors de la pose de la fixation 12.

Une fixation 12 similaire à celle décrite ci-dessus est notamment décrite dans le document EP2894356 au nom de la Demanderesse.

La structure 14 comprend une première 50 et une seconde 52 faces sensiblement parallèles. Dans le mode de réalisation représenté, les première 50 et seconde 52 faces sont planes.

La structure 14 comprend en outre un perçage 54 débouchant sur les première 50 et seconde 52 faces. Du côté de la première face 50, le perçage 54 comporte un fraisage apte à accueillir la collerette 42 de la douille 30.

Dans le mode de réalisation représenté en figure 1, l'ensemble 10 de pose comporte : un nez 100 de pose ; un outil 200 de pose ; et un dispositif 300 d'interface entre le nez 100 de pose et l'outil 200 de pose.

Dans le mode de réalisation représenté, le nez 100 de pose, le dispositif 300 d'interface et l'outil 200 sont assemblés les uns aux autres, d'une manière qui sera décrite ultérieurement ; et alignés selon un premier axe 102. Dans la suite de la description, il sera fait référence au premier axe 102 pour décrire chacun du nez 100 de pose, de l'outil 200 de pose et du dispositif 300 d'interface en tant que tel.

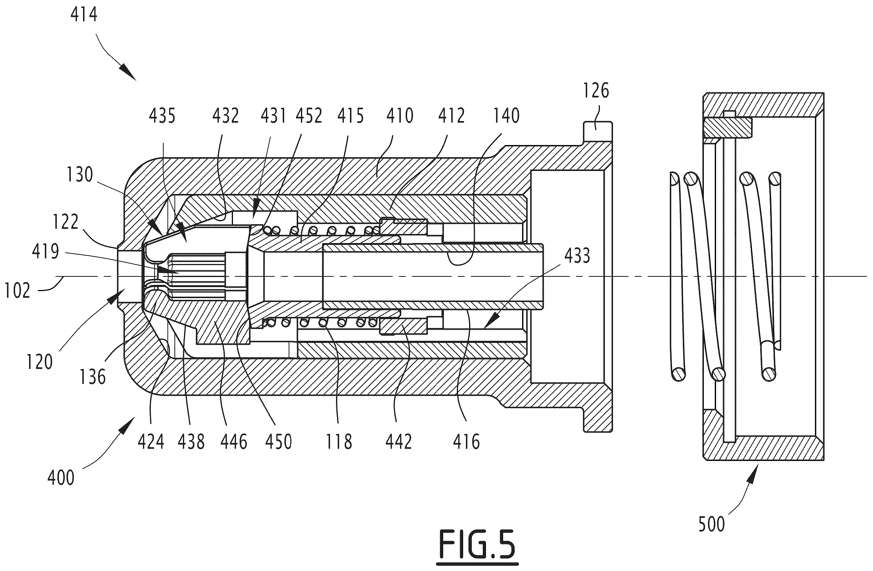

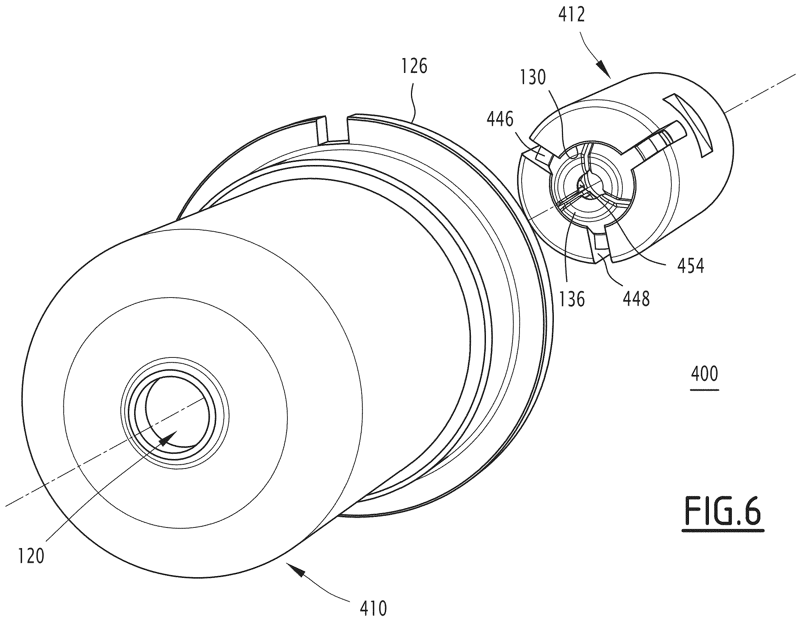

Le nez 100 de pose est visible aux figures 1 et 3-4. Les figures 5 et 6 représentent un nez 400 de pose selon une variante de réalisation, pouvant remplacer le nez 100 de pose dans l'ensemble 10.

Les nez 100 et 400 de pose seront décrits simultanément ci-après. Les éléments communs seront désignés par les mêmes numéros de référence. On considère que le nez 400 de pose s'étend également selon le premier axe 102.

Le nez 100, 400 de pose comporte : un corps creux 110, 410 ; un manchon 112, 412 ; un dispositif de maintien 114, 414 ; un premier élément tubulaire 115, 415 et un deuxième élément tubulaire 116, 416. Dans les modes de réalisation représentés, le nez 100, 400 de pose comporte en outre : un premier ressort 118 de compression ; et une deuxième surface 119, 419 d'entraînement.

Le corps creux 110, 410 s'étend selon le premier axe 102 entre une première et une seconde extrémité, dénommées par la suite « extrémité avant » et « extrémité arrière ». Dans les modes de réalisation représentés, le corps creux 110, 410 comporte une surface radiale externe sensiblement cylindrique de révolution.

L'extrémité avant du corps creux 110, 410 comprend une première ouverture avant 120, apte à accueillir l'élément de préhension 26 de la fixation 12. Dans la suite de la description de l'ensemble 10, l'orientation « avant » correspond à l'orientation vers la fixation 12 assemblée au nez 100 de pose.

Dans le mode de réalisation représenté, l'extrémité avant du corps creux 110, 410 comprend en outre une lèvre avant 122, disposée autour de la première ouverture avant 120 et orientée vers l'extérieur du corps creux. La lèvre avant 122 forme une couronne plane, perpendiculaire au premier axe 102.

De préférence, ladite couronne plane formée par la lèvre avant 122 est sensiblement superposable à la surface d'appui 46 de la collerette 42 de la douille de la fixation 12. En d'autres termes, la lèvre avant 122 et la surface d'appui 46 ont des surfaces annulaires proches l'un de l'autre.

En variante non représentée, la couronne plane formée par la lèvre avant 122 est apte à entourer la surface d'appui 46 de la collerette 42. En d'autres termes, la lèvre avant 122 a un diamètre externe supérieur au diamètre externe de la surface d'appui 46.

Dans le mode de réalisation représenté, l'extrémité avant du corps creux 110, 410 comprend en outre une butée 124, 424, disposée autour de la première ouverture avant 120 et orientée vers l'intérieur du corps creux.

L'extrémité arrière du corps creux 110, 410 comprend une bride 126, en saillie radiale par rapport à la surface radiale externe dudit corps creux.

Le manchon 112, 412 est reçu dans le corps creux 110, 410 et s'étend selon le premier axe 102 entre une extrémité avant et une extrémité arrière. L'extrémité avant du manchon 112, 412 comprend une deuxième ouverture avant 130, axialement alignée à la première ouverture avant 120 du corps creux.

Dans le mode de réalisation représenté, l'extrémité avant du manchon 112, 412 comprend en outre une chambre interne 131, 431 et une surface annulaire interne 132, 432.

La chambre interne 131, 431 présente une dimension radiale strictement supérieure à une dimension radiale de la deuxième ouverture avant 130. La surface annulaire interne 132, 432 est disposée autour de la deuxième ouverture avant 130 et est située axialement entre ladite deuxième ouverture avant 130 et la chambre interne 131, 431.

Dans les modes de réalisation représentés, la surface annulaire interne 132, 432 a une forme tronconique concave qui s'évase vers la chambre interne 131, 431 depuis la deuxième ouverture avant 130.

L'extrémité arrière du manchon 112, 412 comprend un organe 133, 433 d'accouplement avec un élément de l'outil 200 de pose, comme ultérieurement décrit. L'organe 133, 433 d'accouplement comprend par exemple un taraudage ménagé sur une surface interne du manchon.

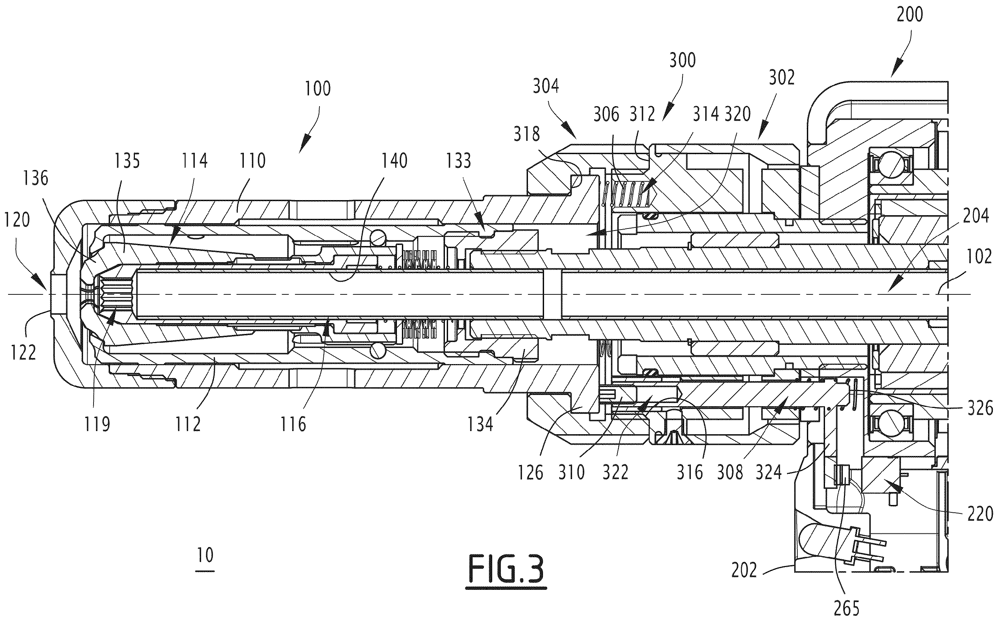

De manière optionnelle, comme dans le nez 100 de pose des figures 3-4, l'organe 133 d'accouplement comprend une bague intercalaire 134 pour compenser une différence de diamètres entre le manchon et l'outil de pose.

Comme décrit plus en détail ci-après, le manchon 112, 412 est mobile en translation et en rotation par rapport au corps creux 110, 410.

Le dispositif de maintien 114, 414 est apte à bloquer l'élément de préhension 26 de la fixation 12 dans la deuxième ouverture avant 130 du manchon 112, 412.

Préférentiellement, le dispositif de maintien 114, 414 comporte au moins deux pinces 135, 435, plus préférentiellement au moins trois pinces. Lesdites pinces 135, 435 sont au moins partiellement reçues dans le manchon 112, 412 et disposées angulairement autour du premier axe 102. Une extrémité avant de chacune des pinces comprend un crochet 136.

Dans les modes de réalisation représentés, chacune des pinces comprend une surface annulaire externe 138, 438, disposée proche du crochet 136. Plus précisément, dans les modes de réalisation représentés, chaque surface annulaire externe 138, 438 a la forme d'une portion de tronc de cône complémentaire de la surface annulaire interne 132, 432 du manchon 112, 412.

Les pinces 135, 435 sont mobiles radialement par rapport au corps creux 110, 410 entre une configuration déployée (non représentée) et une configuration rétractée (figures 3-4 et 5-6), chaque crochet 136 étant plus proche du premier axe 102 dans la configuration rétractée que dans la configuration déployée.

Les pinces 135, 435 sont bloquées en rotation par rapport au manchon 112, 412, ledit manchon étant apte à entraîner les pinces en translation et en rotation par rapport au corps creux 110, 410.

Les pinces 135, 435 sont mobiles en translation dans le manchon 112, 412 entre une position avant et une position arrière.

Dans la position avant des pinces 135, 435, lesdites pinces sont maintenues en configuration rétractée par le manchon 112, 412. Dans les modes de réalisation représentés, ledit maintien en configuration rétractée est réalisé par le contact entre la surface annulaire externe 138, 438 de chaque pince, en position avant, et la surface annulaire interne 132, 432 du manchon.

Dans la position arrière des pinces 135, 435, la surface annulaire externe 138, 438 de chaque pince est axialement écartée de la surface annulaire interne 132, 432 du manchon. Les pinces sont aptes à s'écarter radialement les unes des autres dans la chambre interne 131, 431 dudit manchon.

Le dispositif de maintien 114, 414 sera décrit plus en détail ci-après.

Le premier élément tubulaire 115, 415 s'étend dans le manchon 112, 412 selon le premier axe 102, entre une extrémité avant et une extrémité arrière ouvertes. L'extrémité avant du premier élément tubulaire 115, 415 comprend une surface d'appui destinée à contacter une surface interne des pinces 135, 435 comme cela sera décrit plus précisément dans la suite de la description. Le premier élément tubulaire 115, 415 comprend également une surface d'appui pour le premier ressort 118 de compression.

Dans l'exemple du nez de pose 100 des figures 3 et 4, l'extrémité arrière du premier élément tubulaire 115 comprend la surface d'appui destinée à recevoir une extrémité du premier ressort 118 de compression. Ladite surface d'appui est formée dans cet exemple par un épaulement interne d'une couronne disposée à l'arrière de l'élément tubulaire. Dans l'exemple du nez de pose 400 de la figure 5, la surface d'appui est une collerette disposée à l'avant du premier élément tubulaire 415. D'autres formes de réalisation de la surface d'appui peuvent être envisagées.

Les crochets 136 des pinces 135, 435 sont disposés axialement entre la première ouverture avant 120 du corps creux 110, 410 et l'extrémité avant du premier élément tubulaire 115, 415.

Le deuxième élément tubulaire 116, 416 s'étend partiellement dans le premier élément tubulaire 115, 415 selon le premier axe 102, entre une extrémité avant et une extrémité arrière ouvertes. L'extrémité avant du deuxième élément tubulaire 116, 416 repose contre une surface interne du premier élément tubulaire 115, 415 adaptée pour former une butée.

Une dimension radiale interne du deuxième élément tubulaire 116, 416, depuis l'extrémité avant jusqu'à l'extrémité arrière dudit deuxième élément tubulaire, est supérieure ou égale à la dimension radiale maximale 38 de l'élément de préhension 26 de la fixation 12.

Préférentiellement, le deuxième élément tubulaire 116, 416 comprend une surface interne principale 140, sensiblement cylindrique de révolution. Plus préférentiellement, une dimension radiale de la surface interne principale 140 est strictement supérieure à la dimension radiale maximale 38 de l'élément de préhension 26.

Le deuxième élément tubulaire 116, 416 est fixe en translation par rapport au manchon 112, 412.

Comme il sera décrit ultérieurement, le manchon 112, 412 est apte à entraîner le premier élément tubulaire 115, 415 en translation et en rotation par rapport au corps creux 110, 410. Le premier élément tubulaire 115, 415 est également libre de coulisser par rapport au manchon 112, 412 et par rapport au deuxième élément tubulaire 116, 416 sous l'effet d'une poussée axiale sur les crochets 135, 435.

Le premier ressort 118 de compression est disposé radialement entre le premier élément tubulaire 115, 415 et le manchon 112, 412. Ledit premier ressort 118 de compression s'étend selon le premier axe 102 entre deux extrémités.

Dans l'exemple de nez de pose 100 des figures 3 et 4, lesdites extrémités sont en butée respectivement contre l'épaulement interne de la couronne disposée à l'arrière du premier élément tubulaire 115 et contre une rondelle 142 disposée sur une portion du deuxième élément tubulaire 116.

Dans l'exemple de nez de pose 400 de la figure 5, lesdites extrémités sont en butée respectivement contre la collerette disposée à l'avant du premier élément tubulaire 115 et contre une bague 442 disposée autour d'une portion du premier 415 et du deuxième élément tubulaire 416. La bague 442 est solidaire du manchon 412.

Le premier élément tubulaire 115, 415 est ainsi mobile en translation dans le manchon 112, 412 entre une position avant et une position arrière par rapport au premier axe 102. Dans la position avant du premier élément tubulaire 115, 415, ledit premier élément tubulaire est plus proche de la première ouverture avant 120 du corps creux ; et le premier ressort 118 est dans un premier état de compression. Dans la position arrière du premier élément tubulaire 115, 415, ledit premier élément tubulaire est plus éloigné de la première ouverture avant 120 du corps creux ; et le premier ressort 118 est dans un second état de compression, plus comprimé que le premier état de compression.

La deuxième surface d'entraînement 119, 419 est apte à coopérer avec l'élément de préhension 26 de la fixation 12 pour entraîner en rotation ledit élément de préhension. Plus précisément, la deuxième surface d'entraînement 119, 419 est apte à s'assembler à la première surface d'entraînement 36 du bouton de préhension 34. La deuxième surface d'entraînement 119, 419 sera décrite plus en détails ci-après.

Le nez 100 de pose des figures 1 et 3-4 va à présent être plus précisément décrit.

Le dispositif de maintien 114 du nez 100 de pose comprend un corps de pince 144 de forme annulaire, disposé dans le manchon 112 autour du premier élément tubulaire 115. Une extrémité arrière de chaque pince 135 est solidaire dudit corps de pince 144.

Chaque pince 135 est déformable élastiquement entre la configuration rétractée et la configuration déployée. Dans le mode de réalisation représenté, le dispositif de maintien 114 comprend six pinces 135 déformables élastiquement.

Le corps de pince 144 est bloqué en rotation dans le manchon 112. Dans le mode de réalisation représenté, le corps de pince 144 comporte des méplats 146 et est assemblé au manchon par des clavettes 148 qui permettent audit corps de pince 144 de coulisser axialement dans le manchon 112.

Le deuxième élément tubulaire 116 est bloqué en rotation dans le corps de pince 144. Dans le mode de réalisation représenté, le corps de pince 144 comporte sur la surface extérieure de la couronne un évidement s'étendant axialement. L'évidement a une section semi-circulaire et reçoit une tige de section circulaire. La portion arrière du corps de pince 144 comprend sur une portion de surface intérieure un évidement s'étendant axialement et de section semi-circulaire. Le deuxième élément tubulaire 116 est assemblé au corps de pince par la tige. La présence de la tige empêche la rotation d'un élément par rapport à l'autre.

Par ailleurs, dans le nez 100 de pose, la deuxième surface d'entraînement 119 est formée par l'extrémité avant du premier élément tubulaire 115.

Le nez 400 de pose des figures 5 et 6 va à présent être plus précisément décrit.

Le dispositif de maintien 414 du nez 400 de pose comprend une pluralité de languettes 446, chacune desdites languettes étant solidaire de l'une des pinces 435. Dans le mode de réalisation représenté, le dispositif de maintien 414 comprend trois pinces 435 et trois languettes 446.

De plus, l'extrémité avant du manchon 412 comporte une pluralité de fentes axiales 448, disposées angulairement autour du premier axe 102. Chaque languette 446 est disposée dans l'une des fentes axiales 448 et apte à coulisser dans ladite fente axiale, entre la position avant et la position arrière de la pince 435 correspondante.

Par ailleurs, l'extrémité avant du premier élément tubulaire 415 comporte une surface frontale 450 ; et une extrémité arrière de chacune des pinces comporte une surface postérieure 452, apte à coulisser radialement contre ladite surface frontale 450.

La surface frontale 450 présente un angle non nul avec le premier axe 102. De préférence, ladite surface frontale 450 forme un angle compris entre 0° et 15° avec un plan perpendiculaire au premier axe 102.

Dans le mode de réalisation représenté, la surface frontale 450 du premier élément tubulaire 415 a la forme d'un tronc de cône convexe et la surface postérieure 452 de chaque pince 435 a la forme d'une portion de tronc de cône concave, sensiblement complémentaire de la surface frontale 450.

Par ailleurs, dans le nez 400 de pose, la deuxième surface d'entraînement 419 est formée par des surfaces intérieures des pinces 435 en configuration rétractée. Plus précisément, chaque pince 435 comporte une surface intérieure 454, orientée vers le premier axe 102 et formant une portion de la deuxième surface d'entraînement 419.

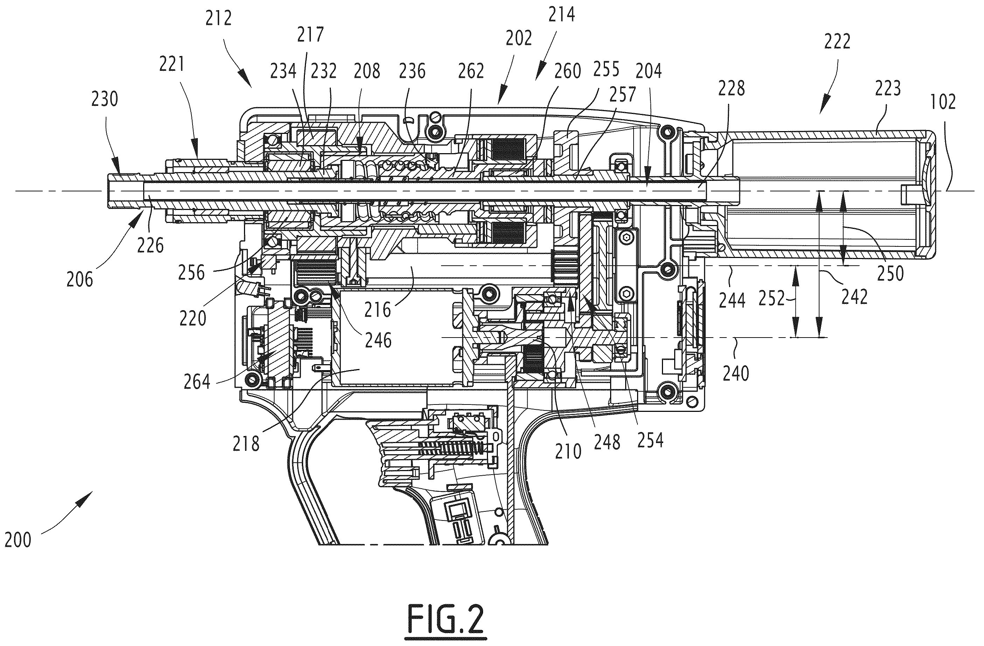

L'outil 200 de pose de l'ensemble 10, visible aux figures 1 et 2, va à présent être décrit.

L'outil 200 de pose comprend : un boîtier 202 ; un tube 204 ; un premier 206 et un deuxième 208 fourreaux ; un premier arbre rotatif 210 ; et un premier 212 et un deuxième 214 dispositifs de transmission. Dans le mode de réalisation représenté, l'outil 200 de pose comprend en outre : un deuxième arbre rotatif 216 ; un moteur 218 ; un circuit électrique 219 relié au moteur ; et un premier interrupteur 220.

Le boîtier 202 comporte une extrémité avant 221 ouverte et une extrémité arrière 222, alignées selon le premier axe 102. Dans le mode de réalisation représenté, l'extrémité arrière 222 du boîtier comprend un réceptacle 223 amovible, disposé selon le premier axe 102.

Par ailleurs, dans le mode de réalisation représenté, le boîtier 202 comporte : un logement principal 224, à travers lequel s'étend le tube 204 ; et une poignée 225. La poignée 225 est apte à être saisie par un opérateur.

Le tube 204 est reçu dans le boîtier 202 et s'étend selon le premier axe 102, entre une extrémité avant 226 et une extrémité arrière 228 ouvertes. L'extrémité avant 226 du tube 204 est en saillie axiale par rapport à l'extrémité avant 221 du boîtier 202. L'extrémité arrière 228 du tube 204 est reçue à l'intérieur du boîtier 202. Dans le mode de réalisation représenté, l'extrémité arrière 228 du tube 204 ouvre sur le réceptacle 223.

Dans le mode de réalisation représenté, le tube 204 est fixe par rapport au boîtier 202.

Une dimension radiale interne du tube 204, depuis l'extrémité avant 226 jusqu'à l'extrémité arrière 228 dudit tube, est supérieure ou égale à la dimension radiale maximale 38 de l'élément de préhension 26 de la fixation 12. De préférence, le tube 204 présente une dimension radiale interne sensiblement constante le long du premier axe 102. Ladite dimension radiale interne est sensiblement égale à la dimension radiale de la surface interne principale 140 du deuxième élément tubulaire 116, 416 du nez 100, 400 de pose précédemment décrit.

Le premier fourreau 206 s'étend dans le boîtier 202 selon le premier axe 102, entre une extrémité avant 230 et une extrémité arrière 232. Le premier fourreau 206 est disposé autour du tube 204.

Le premier fourreau 206 est proche de l'extrémité avant 221 du boîtier 202. Plus précisément, l'extrémité avant 230 du premier fourreau 206 est en saillie axiale par rapport à l'extrémité avant 221 du boîtier 202 et par rapport à l'extrémité avant 226 du tube 204.

Dans l'ensemble 10, l'extrémité avant 230 du premier fourreau 206 est fixée à l'extrémité arrière du manchon 112 du nez 100 de pose, par l'intermédiaire de l'organe 133 d'accouplement.

Par ailleurs, dans l'ensemble 10, l'extrémité avant 230 du premier fourreau 206 est disposée autour de l'extrémité arrière du deuxième élément tubulaire 116 dudit nez 100 de pose, de sorte à mettre en communication ledit deuxième élément tubulaire 116 et le tube 204 selon le premier axe 102.

Comme détaillé ci-après, le premier fourreau 206 est mobile en rotation et en translation par rapport au boîtier 202 selon le premier axe 102.

Le deuxième fourreau 208 s'étend dans le boîtier 202 selon le premier axe 102, entre une extrémité avant 234 et une extrémité arrière 236. Le deuxième fourreau 208 est disposé autour du tube 204.

Le deuxième fourreau 208 est plus proche de l'extrémité arrière 222 du boîtier 202 que le premier fourreau 206. Plus précisément, l'extrémité avant 234 du deuxième fourreau 208 est assemblée à l'extrémité arrière 232 du premier fourreau 206.

Comme détaillé ci-après, le deuxième fourreau 208 est configuré pour entraîner le premier fourreau 206 en translation par rapport au boîtier, selon le premier axe 102.

Le premier arbre rotatif 210 est reçu dans le boîtier 202 et s'étend selon un deuxième axe 240, les premier 102 et deuxième 240 axes étant séparés d'une première distance 242 non nulle. Dans le mode de réalisation représenté, les premier 102 et deuxième 240 axes sont parallèles.

Dans le mode de réalisation représenté, le premier arbre rotatif 210 est disposé dans le logement principal 224 du boîtier.

Le premier dispositif de transmission 212 est reçu dans le boîtier 202 et relié au premier arbre rotatif 210. Comme détaillé ci-après, le premier dispositif de transmission 212 est apte à entraîner en rotation le premier fourreau 206 sous l'effet d'une rotation du premier arbre rotatif 210 dans un premier sens.

Le deuxième dispositif de transmission 214 est reçu dans le boîtier 202 et relié au premier arbre rotatif 210. Comme détaillé ci-après, le deuxième dispositif de transmission 214 est apte à entraîner en translation le deuxième fourreau 208 sous l'effet d'une rotation du premier arbre rotatif 210 dans un deuxième sens, opposé au premier sens.

Le deuxième arbre rotatif 216 est reçu dans le boîtier 202 et s'étend selon un troisième axe 244, entre une extrémité avant 246 et une extrémité arrière 248. Ledit troisième axe est séparé des premier 102 et deuxième 230 axes, respectivement par une deuxième 250 et par une troisième 252 distances non nulles. De préférence, le troisième axe 244 est parallèle au premier axe 102. Dans le mode de réalisation représenté, le troisième axe 244 est parallèle aux premier 102 et deuxième 240 axes.

Dans le mode de réalisation représenté, le deuxième arbre rotatif 216 est disposé dans le logement principal 224 du boîtier.

Le premier dispositif 212 de transmission comprend un premier train d'engrenage 254, un palier 217 et une première roue libre 256.

Les premier 210 et deuxième 216 arbres rotatifs sont reliés par le premier train d'engrenages 254, tel qu'une rotation du premier arbre rotatif 210 dans chacun des sens de rotation entraîne le deuxième arbre rotatif 216 dans un sens de rotation correspondant.

L'extrémité avant 246 du deuxième arbre rotatif 216 est reliée au palier 217, qui est par exemple un palier à rouleaux. Plus précisément, le palier 217 relie le deuxième arbre rotatif 216 à la première roue libre 256, disposée sur le premier fourreau 206.

La première roue libre 256 est apte à entraîner en rotation le premier fourreau 206 sous l'effet d'une rotation du premier arbre rotatif 210 dans le premier sens, par l'intermédiaire du premier dispositif 212 de transmission. En cas de rotation du premier arbre rotatif 210 dans le deuxième sens, la première roue libre 256 n'entraîne pas le premier fourreau 206 en rotation.

Par ailleurs, le deuxième dispositif de transmission 214 comprend : le premier train d'engrenage 254, un deuxième train d'engrenage 255, un arbre creux 257, une deuxième roue libre 260 ; et un élément d'entraînement 262, apte à être entraîné en rotation par ladite deuxième roue libre, sous l'effet d'une rotation du premier arbre rotatif 210 dans le deuxième sens. Ledit élément d'entraînement 262 coopère avec le deuxième fourreau 208, de sorte à déplacer en translation ledit deuxième fourreau selon le premier axe.

Le deuxième train d'engrenage 255 relie le deuxième arbre rotatif 216 à l'arbre creux 257. L'arbre creux 257 est disposé sur une portion arrière du tube 204. La deuxième roue libre 260 est disposée selon le premier axe 102 et interposée entre l'arbre creux 257 et une extrémité arrière de l'élément d'entrainement 262. En cas de rotation du premier arbre rotatif 210 dans le premier sens, la deuxième roue libre 260 n'entraîne pas l'élément d'entraînement 262 en rotation.

Dans le mode de réalisation représenté, l'élément d'entraînement 262 est une vis à billes. En variante non représentée, l'élément d'entraînement 262 est une vis filetée, une vis à rouleaux ou une vis sans fin.

Le moteur 218 est un moteur électrique reçu dans le boîtier 202, préférentiellement dans le logement principal 224. Dans le mode de réalisation représenté, le premier arbre rotatif 210 forme un arbre de sortie dudit moteur.

Le circuit électrique 219 est relié au moteur 218. Dans le mode de réalisation représenté, l'outil 200 de pose comporte un module électronique 264 qui matérialise au moins partiellement le circuit électrique 219.

Le premier interrupteur 220 est reçu à l'intérieur du boîtier 202 et intégré au circuit électrique 219. Le premier interrupteur 220 est mécaniquement mobile entre un état ouvert, représenté sur la figure 2, et un état fermé. Dans l'état ouvert du premier interrupteur 220, le circuit électrique 219 est coupé.

De préférence, le premier interrupteur 220 comprend une lame élastique 265 qui, au repos, maintient ouvert ledit premier interrupteur. Un appui sur ladite lame élastique permet de fermer ledit premier interrupteur.

Dans le mode de réalisation représenté, l'outil 200 de pose comporte en outre une alimentation électrique 266 du moteur, raccordée au circuit électrique 219. L'alimentation électrique est par exemple une batterie électrique 266 reliée au boîtier 202. De préférence, ladite batterie électrique 266 est fixée de manière amovible à la poignée 225, à l'opposé du logement principal 224. La batterie électrique 266 forme ainsi un contrepoids audit logement principal, pour une meilleure ergonomie de l'outil 200.

Par ailleurs, dans le mode de réalisation représenté, l'outil 200 de pose comporte en outre : un deuxième interrupteur (non représenté) ; et une gâchette 268.

Le deuxième interrupteur est intégré au circuit électrique 219 et mobile entre un état ouvert et un état fermé. Dans l'état ouvert du deuxième interrupteur, le circuit électrique 219 est coupé.

La gâchette 268 est installée sur la poignée 225 du boîtier 202. De préférence, un appui de l'opérateur sur la gâchette place le deuxième interrupteur dans l'état fermé ; et en l'absence d'appui sur la gâchette, le deuxième interrupteur est dans l'état ouvert.

De préférence, lorsque chacun des premier 220 et deuxième interrupteurs est dans l'état fermé, le circuit électrique 219 est fermé et permet à la batterie électrique 266 d'alimenter le moteur 218.

Le dispositif 300 d'interface de l'ensemble 10, visible aux figures 1 et 3, va à présent être décrit.

Le dispositif 300 d'interface comprend : un corps d'interface 302 ; une bague d'assemblage 304 ; au moins un deuxième ressort 306 de compression ; et une tige de contact 308. De préférence, comme précisé ci-après, le dispositif 300 d'interface comprend en outre un capteur de pression (non représenté).

Le corps d'interface 302 présente une forme annulaire et s'étend selon le premier axe 102 entre une extrémité avant et une extrémité arrière.

L'extrémité avant du corps d'interface 302 comporte une face avant 312 en forme de couronne plane, perpendiculaire au premier axe 102.

L'extrémité avant du corps d'interface 302 comporte en outre au moins un logement de ressort 314 ouvrant sur la face avant 312. De préférence, l'extrémité avant du corps d'interface 302 comporte plusieurs logements de ressort 314 répartis angulairement autour du premier axe 102.

Le corps d'interface 302 comporte en outre un trou traversant 316, parallèle au premier axe 102. Le trou traversant 316 est ouvert sur la face avant 312 et sur l'extrémité arrière du corps d'interface 302.

La bague d'assemblage 304 présente une forme annulaire et s'étend selon le premier axe 102 entre une extrémité avant et une extrémité arrière. La bague d'assemblage 304 comporte un épaulement interne 318 orienté vers l'extrémité arrière de ladite bague d'assemblage.

L'extrémité arrière de la bague d'assemblage 304 est assemblée à l'extrémité avant du corps d'interface 302, par exemple par un système filetage/taraudage. La bague d'assemblage 304 comprend ainsi une cavité interne 320, délimitée selon le premier axe 102 par l'épaulement interne 318 d'une part et par la face avant 312 du corps d'interface 302 d'autre part.

L'au moins un deuxième ressort 306 de compression est fixé au corps d'interface 302 et en saillie axiale par rapport à la face avant 312. Dans le mode de réalisation représenté, une extrémité arrière dudit deuxième ressort 306 de compression est insérée dans le ou l'un des logements de ressort 314.

Dans un premier état de compression du deuxième ressort 306, une extrémité avant dudit deuxième ressort est disposée dans la cavité interne 320, en saillie axiale par rapport à la face avant 312 du corps d'interface 302. Dans un deuxième état de compression du deuxième ressort 306, plus comprimé que le premier état, l'extrémité avant dudit deuxième ressort est disposée dans le logement de ressort 314 et affleure la face avant 312 du corps d'interface.

De préférence, le dispositif 300 d'interface comprend plusieurs deuxièmes ressorts 306 de compression, l'extrémité arrière de chacun desdits deuxièmes ressorts étant insérée dans l'un des logements de ressort 314.

La tige de contact 308 s'étend parallèlement au premier axe 102 entre une extrémité avant et une extrémité arrière. La tige de contact 308 est disposée dans le trou traversant 316 du corps d'interface 302 et apte à coulisser axialement dans ledit trou traversant.

De préférence, l'extrémité avant de la tige de contact 308 comprend un logement taraudé, ouvert vers l'avant, pouvant recevoir une vis filetée 310, afin de régler manuellement la course de désaffleurement de la tige de contact, notamment en fonction de la raideur des ressorts de compression 314.

Comme décrit ci-après, l'extrémité arrière de la tige de contact 308 est apte à actionner le premier interrupteur 220 de l'outil 200 de pose. Dans le mode de réalisation représenté, l'extrémité arrière de la tige de contact 308 comprend un bras d'actionnement 324, disposé dans le boîtier 202 de l'outil de pose.

Par ailleurs, le dispositif 300 d'interface comprend un troisième ressort 326 de compression, s'étendant parallèlement au premier axe 102. Une extrémité avant dudit troisième ressort 326 est assemblée à l'extrémité arrière de la tige de contact 308. Une extrémité arrière dudit troisième ressort 326 est en appui sur, ou fixée au boîtier 202 de l'outil 200 de pose.

La vis 310, optionnelle, est disposée dans le logement 322 de la tige de contact 308. De préférence, comme visible sur la figure 3, la vis 310 est assemblée au logement 322 de sorte qu'une extrémité avant de ladite vis soit légèrement en saillie par rapport à l'extrémité avant de la tige de contact 308.

De préférence, le corps d'interface 302 comprend au moins une jauge de contrainte, et de préférence au moins trois jauges de contraintes, de sorte à constituer le capteur de pression. Le capteur de pression est connecté au module électronique 264 de l'outil 200 de pose. Le capteur de pression permet de mesurer l'effort de traction sur la vis 16, en mesurant l'effort de compression entre la structure 14 et le boitier 202 de l'outil de pose, lorsque la lèvre avant 122 du nez 100 de pose repose sur la collerette 46 de la douille insérée dans le perçage 54 de la structure et qu'une traction est effectuée sur la vis 16.

Dans une première configuration de l'ensemble 10 de pose, visible sur la figure 3, la bride 126 du corps creux 110 du nez 100 de pose est au contact de l'épaulement interne 318 de la bague d'assemblage 304 ; chacun des deuxièmes ressorts 306 est dans le premier état de compression ; l'extrémité avant de la vis 310 ou de la tige de contact 308 est en saillie axiale par rapport à la face avant 312 du corps d'interface ; et le premier interrupteur 220 est ouvert.

Dans une deuxième configuration (non représentée) de l'ensemble 10 de pose, la bride 126 du corps creux du nez de pose est au contact de la face avant 312 du corps d'interface ; l'extrémité avant de la vis 310 ou de la tige de contact 308 est au contact de ladite bride 126 et sensiblement coplanaire avec ladite face avant 312 ; chacun des deuxièmes ressorts 306 est dans le deuxième état de compression, plus comprimé que le premier état ; et le premier interrupteur 220 est fermé.

Plus précisément, dans la première configuration de l'ensemble 10 de pose, le troisième ressort 326 est dans un premier état de compression ; et le bras d'actionnement 324 de la tige de contact 308 est à distance du premier interrupteur 220 selon le premier axe 102 ; et dans la deuxième configuration de l'ensemble 10 de pose, le troisième ressort 326 est dans un deuxième état de compression, plus comprimé que le premier état ; et le bras d'actionnement 324 de la tige de contact 308 appuie sur le premier interrupteur 220 de sorte à maintenir fermé ledit premier interrupteur.

Selon une variante de réalisation (non représentée) de l'ensemble de pose, ledit ensemble de pose ne comprend pas le dispositif 300 d'interface ; et le nez 100, 400 de pose et l'outil 200 de pose sont assemblés par un écrou 500 d'interface, visible sur la figure 5. La bride 126 du corps creux 110, 410 du nez 100, 400 de pose est alors fixe axialement par rapport à l'extrémité avant 221 du boîtier 202 de l'outil de pose.

Selon ladite variante de réalisation de l'ensemble de pose, comprenant l'écrou 500 d'interface, le premier interrupteur 220 de l'outil 200 de pose est maintenu fermé en permanence.

Un procédé de pose de la fixation 12 dans la structure 14, à l'aide de l'ensemble 10 de pose, va à présent être décrit.

Le procédé de pose comprend notamment : une première étape de mise en place ; une deuxième étape d'actionnement ; et une troisième étape de retrait.

La première étape de mise en place se déroule par exemple comme suit :
Tout d'abord, la fixation 12 est insérée dans le perçage 54 de la structure 14. Plus précisément, le fût tubulaire 40 de la douille 30, renfermant la vis 16, est insérée dans le perçage 54 comme visible sur la figure 4. La tête 22 de la vis 16 et la collerette 42 de la douille 30 se trouvent ainsi disposées du côté de la première face 50 ; et la zone déformable 48 du fût tubulaire 40 de la douille émerge du côté de la seconde face 52.

Ensuite, un opérateur approche l'ensemble 10 de pose de l'élément de préhension 26 de la fixation 12. L'opérateur appuie sur la gâchette 268, refermant ainsi le deuxième interrupteur de l'outil 200 de pose ; et insère le bouton de préhension 34 dans la première ouverture avant 120 du nez 100, 400 de pose. L'opérateur place l'ensemble 10 de pose afin que le premier axe 102 soit aligné avec l'axe 20 de fixation.

L'ensemble 10 est alors dans la première configuration précédemment décrite. En d'autres termes, la bride 126 du nez 100, 400 de pose est au contact de l'épaulement interne 318 de la bague 304 de serrage ; et le premier interrupteur 220 est ouvert, l'alimentation du moteur 218 de l'outil 200 de pose étant ainsi coupée.

Ensuite, l'opérateur exerce une poussée de l'ensemble 10 de pose vers la structure 14 selon le premier axe 102. Le bouton de préhension 34 entre en contact avec les crochets 136 des pinces 135, 435 en configuration rétractée.

La poussée axiale se poursuivant, le premier ressort 118 se comprime et les pinces 135, 435 et l'élément tubulaire 116, 416 passent de la position avant à la position arrière. Le bouton de préhension 34, au contact des crochets 136, déplace radialement les pinces 135, 435 de la configuration rétractée à la configuration déployée. Dans le premier mode de réalisation du nez 100 de pose, les pinces 135 se déforment élastiquement autour du corps 144 de pince. Dans le deuxième mode de réalisation du nez 400 de pose, la surface postérieure 452 de chaque pince 435 coulisse radialement contre la surface frontale 416 du premier élément tubulaire 115.

La poussée axiale se poursuivant, les crochets 136 des pinces dépassent le bouton de préhension 34 et se referment sur la tige 32 de préhension. Lesdites pinces 135, 435 reviennent ainsi en configuration rétractée. Simultanément, le premier ressort 118 se détend, et les pinces 135, 435 et le premier élément tubulaire 115, 415 passent de la position arrière à la position avant ; et la deuxième surface d'entraînement 119, 419 du nez 100, 400 de pose s'assemble à la première surface d'entraînement 36 de la fixation.

L'élément de préhension 26 de la fixation 12 est ainsi bloqué dans le manchon 112, 412 par le dispositif de maintien 114, 414 du nez 100, 400 de pose.

La poussée axiale se poursuivant, la lèvre avant 122 du nez 100, 400 de pose entre en contact avec la surface d'appui 46 de la collerette 42 de la douille 30. Le corps creux 110, 410 du nez 100, 400 de pose est alors déplacé vers l'arrière par rapport à l'outil 200.

Au cours dudit déplacement vers l'arrière dudit corps creux 110, 410, la butée arrière 124, 424 dudit corps creux vient au contact des crochets 136 des pinces 135, 435.

Par ailleurs, ledit déplacement vers l'arrière dudit corps creux 110, 410 conduit l'ensemble 10 à se déplacer de la première configuration à la deuxième configuration. En d'autres termes, la bride 126 du corps creux 110, 410 se déplace vers l'arrière dans la cavité interne 320 de la bague 304 de serrage, repoussant la tige de contact 308. Le bras d'actionnement 324 de ladite tige de contact place le premier interrupteur 220 en position fermée, permettant l'alimentation du moteur 218 de l'outil 200 de pose.

La première étape de mise en place est ainsi achevée. Selon une variante de réalisation, le blocage de l'élément de préhension 26 de la fixation par le dispositif de maintien 114, 414 du nez 100, 400 de pose est réalisé avant l'insertion de la fixation 12 dans le perçage de la structure 14.

La deuxième étape d'actionnement se déroule par exemple comme suit :
Un procédé d'actionnement est alors mis en œuvre par l'outil 200. Ledit procédé est par exemple exécuté par un programme mémorisé dans le module électronique 264. En particulier, le module électronique 264 est apte à traiter les signaux émis par le capteur de pression pour déterminer un effort de traction, commander l'arrêt du premier arbre rotatif 210 dans le deuxième sens quand l'effort de traction atteint une consigne d'effort prédéterminée, puis commander la mise en rotation dudit premier arbre rotatif 210 dans le premier sens.

Dans une première phase du procédé d'actionnement, le premier arbre rotatif 210 de l'outil 200 de pose est mis en rotation dans le deuxième sens. Le deuxième fourreau 208 de l'outil 200 est ainsi déplacé en translation vers l'arrière, par l'intermédiaire du deuxième dispositif 214 de transmission.

Le deuxième fourreau 208 entraîne le premier fourreau 206 en translation vers l'arrière, tandis que la poussée axiale du nez 100, 400 de pose vers la structure 14 est maintenue. La vis 16 de la fixation 12 est ainsi tirée vers l'arrière, tandis que la douille 30 est maintenue en place par le contact entre la lèvre avant 122 et la surface d'appui 46.

La traction sur la vis 16 conduit la zone déformable 48 de la douille 30 à former un bourrelet radial contre la seconde face 52 de la structure 14, comme décrit dans le document EP2894356.

Dans une deuxième phase du procédé d'actionnement, la rotation du moteur dans le deuxième sens est arrêtée ; puis le premier arbre rotatif 210 de l'outil 200 de pose est mis en rotation dans le premier sens. Le premier fourreau 206 de l'outil 200 est ainsi entraîné en rotation par l'intermédiaire du premier dispositif 212 de transmission.

La portion filetée 24 de la vis 16 est ainsi vissée dans la portion taraudée 44 de la douille 30, jusqu'à mise en contact de la tête 22 de la vis avec la collerette 42 de la douille.

La rotation du premier fourreau 206 est poursuivie jusqu'à la rupture de la gorge 28 de rupture, sous l'effet du couple de torsion appliqué à l'élément de préhension 26. Lors de la rupture de la gorge, le module électronique 264 commande l'arrêt de la rotation du moteur. La deuxième étape d'actionnement est ainsi achevée. De manière optionnelle, durant ladite deuxième étape d'actionnement, le capteur de pression décrit ci-dessus mesure une compression entre le corps creux 110, 410 du nez de pose et le corps d'interface 302.

La troisième étape de retrait se déroule par exemple comme suit :
Après la rupture de la gorge 28 de rupture de la fixation 12, l'opérateur met fin à l'effort axial de l'ensemble 10 de pose vers la structure 14. L'ensemble 10 de pose, écarté de la structure 14, passe de la deuxième configuration à la première configuration. Le moteur 218 ne peut ainsi plus être mis en route inopinément, même si l'opérateur appuie sur la gâchette 268.

La vis 16 et la douille 30 restent assemblées à la structure 14 tandis que l'élément de préhension 26, dissocié de la vis 16, reste retenu dans le nez 100, 400 de pose.

Ensuite, l'opérateur bascule vers le haut le nez 100, 400 de pose. L'élément de préhension 26 se déplace ainsi par gravité le long du premier axe 102, depuis l'extrémité avant de l'élément tubulaire 116, 416 du nez 100, 400 de pose jusqu'à l'extrémité arrière 228 du tube 204 de l'outil de pose. L'élément de préhension 26 est ainsi stocké dans le réceptacle 223 amovible, ce qui lui évite d'être éjecté inopinément de l'outil 200 de pose.

En variante, l'élément de préhension 26 est évacué vers le tube 204 de l'outil 200 par l'insertion, dans le nez 100, 400 de pose, de l'élément de préhension 26 d'une nouvelle fixation 12.

Selon la variante de réalisation décrite ci-dessus de l'ensemble de pose, comprenant l'écrou 500 d'interface, seul le deuxième interrupteur de l'outil 200 de pose permet d'ouvrir ou de fermer le circuit électrique 219. La mise en route du moteur 218 dépend donc uniquement de l'actionnement de la gâchette 268 par l'opérateur, et non de l'appui axial de l'ensemble de pose contre la structure 14.

L'ensemble 10 de pose décrit ci-dessus, en particulier l'ensemble comprenant l'interface 300 de pose, comprend un interrupteur qui est fermé par une poussée axiale de l'ensemble 10 contre la structure 14 sans que l'opérateur n'ait à activer avec son index un tel interrupteur.

Dans l'exemple d'un ensemble de pose décrit ci-dessus, comprenant un deuxième interrupteur 268 sous la forme d'une gâchette disposée sur la poignée 225, un opérateur peut ainsi poser plusieurs fixations à la suite sans relâcher le deuxième interrupteur 268, permettant de réduire la fréquence d'appui à moins d'un appui par minute, et au cours d'une journée, réduire sensiblement le risque de TMS.

La présence du deuxième interrupteur 268 permet cependant à l'opérateur d'interrompre à tout moment la pose de la fixation 12, offrant une sécurité supplémentaire à l'ensemble 10 de pose.

## Revendications

1. Ensemble (10) de pose d'une fixation (12) dans une structure (14), l'ensemble de pose comprenant :
- un nez (100) de pose, comprenant :
- un corps creux (110), s'étendant selon un axe principal (102), une extrémité arrière du corps creux comprenant une bride (126) ; et
- un premier élément mobile (112, 114), reçu dans le corps creux et mobile par rapport audit corps creux ; le premier élément mobile étant apte à coopérer avec la fixation (12) ;
et
- un outil (200) de pose comprenant :
- un boîtier (202), comprenant une extrémité avant ouverte et une extrémité arrière, alignées selon l'axe principal (102) ;
- un deuxième élément mobile (206, 208), s'étendant dans le boîtier (202) et mobile en rotation et/ou en translation par rapport au boîtier ;
le deuxième élément mobile (206, 208) étant assemblé au premier élément mobile (112, 114), de sorte à entraîner ledit premier élément mobile en translation et/ou en rotation ;
- un moteur (218) électrique ; un arbre de sortie (210) dudit moteur ; et un circuit électrique (219) relié au moteur ; le circuit électrique comprenant un interrupteur (220) mobile entre un état ouvert et un état fermé ;
- un dispositif de transmission (212, 214), reçu dans le boîtier et relié à l'arbre de sortie (210), le dispositif de transmission étant apte à entraîner en rotation et/ou en translation le deuxième élément mobile (206, 208) sous l'effet d'une rotation de l'arbre de sortie (210) ; et
- une alimentation électrique (266) du moteur, raccordée au circuit électrique (220) ;
l'ensemble de pose étant **caractérisé en ce qu'**il comporte en outre un dispositif d'interface (300), comprenant :
- un corps d'interface (302), de forme annulaire disposé selon l'axe principal, le corps d'interface comprenant : une face avant (312), sensiblement perpendiculaire à l'axe principal (102) ; et un trou traversant (316), parallèle à l'axe principal et débouchant sur la face avant ;
- au moins un premier ressort (306) de compression, fixé au corps d'interface et en saillie par rapport à la face avant ;
- une tige de contact (308), apte à coulisser dans le trou traversant (316) du corps d'interface et s'étendant entre une extrémité avant et une extrémité arrière, l'extrémité arrière étant apte à actionner l'interrupteur (220) du circuit électrique vers l'état fermé ou vers l'état ouvert ;
- une bague d'assemblage (304), assemblée au corps d'interface (302) et disposée selon l'axe principal, la bague d'assemblage comprenant : un épaulement (318), sensiblement perpendiculaire à l'axe principal ; et une cavité interne (320), délimitée axialement par ledit épaulement et par la face avant du corps d'interface ;
le corps d'interface étant fixé à l'extrémité avant du boîtier (202) de l'outil de pose (200) et la bague d'assemblage étant assemblée à l'extrémité arrière du corps creux (110) du nez de pose ; la bride (126) du corps creux étant reçue dans la cavité interne de la bague d'assemblage ; une extrémité avant du premier ressort (306) étant au contact de ladite bride ;
l'ensemble de pose étant configuré de sorte que :
- dans une première configuration de l'ensemble de pose, la bride (126) du corps creux du nez de pose est au contact de l'épaulement (318) de la bague d'assemblage ; l'extrémité avant de la tige de contact (308) est en saillie axiale par rapport à la face avant (312) du corps d'interface ; le premier ressort (306) est dans un premier état de compression ; et l'interrupteur (220) est ouvert ;
- dans une deuxième configuration de l'ensemble de pose, la bride (126) du corps creux du nez de pose est au contact de la face avant (312) du corps d'interface ; l'extrémité avant de la tige de contact (308) est au contact de ladite bride ; le premier ressort (306) est dans un deuxième état de compression, plus comprimé que le premier état ; et l'interrupteur (220) est fermé.

2. Ensemble de pose selon la revendication 1, dans lequel : l'extrémité arrière de la tige de contact (308) du dispositif d'interface comprend un bras d'actionnement (324) ; et dans la deuxième configuration, le bras d'actionnement est au contact de l'interrupteur (220) et maintient fermé ledit interrupteur.

3. Ensemble de pose selon la revendication 2, comprenant un deuxième ressort (326) de compression, disposé parallèlement à l'axe principal entre une première et une deuxième extrémités, lesdites première et deuxième extrémités étant fixées respectivement à l'extrémité arrière de la tige de contact (308) et au boîtier (202) de l'outil de pose ; dans un premier état de compression du deuxième ressort (326), le bras d'actionnement (324) de la tige de contact est à distance de l'interrupteur (220) ; et dans un deuxième état de compression du deuxième ressort, plus comprimé que le premier état, ledit bras d'actionnement est au contact de l'interrupteur, de sorte à maintenir fermé ledit interrupteur.

4. Ensemble de pose selon l'une des revendications précédentes, dans lequel le dispositif d'interface comprend plusieurs premiers ressorts (306), disposés autour de l'axe principal, chaque premier ressort étant fixé au corps d'interface et en saillie par rapport à la face avant (312) du corps d'interface.

5. Ensemble de pose selon l'une des revendications précédentes, dans lequel : l'extrémité avant de la tige de contact comporte un logement (322) taraudé ; et le dispositif d'interface comprend en outre une vis (310) filetée, disposée dans ledit logement, de sorte que dans la deuxième configuration de l'ensemble de pose, la vis est au contact de la bride (126) du corps creux (110) du nez de pose.

6. Ensemble de pose selon l'une des revendications précédentes, la fixation étant du type comprenant une tige (16) s'étendant selon un axe de fixation et munie d'une tête (22) ; dans lequel une extrémité avant du corps creux du nez de pose comprend : une ouverture avant (120) ; et une lèvre (122), disposée autour de ladite ouverture avant et apte à entrer en contact avec une surface sensiblement perpendiculaire à l'axe de fixation et disposée autour de la tête (22) de la tige.

7. Ensemble de pose selon la revendication 6, la fixation étant du type comprenant en outre une douille (30), disposée autour de la tige, ladite douille étant munie d'une collerette (42) apte à entrer en contact avec la tête de la tige, la collerette comprenant une surface d'appui (46) perpendiculaire à l'axe de fixation ;
dans lequel la lèvre (122) du corps creux est superposable à la surface d'appui (46) de la collerette de la douille.

8. Ensemble de pose selon la revendication 6 ou 7, la fixation étant du type comprenant en outre un élément de préhension (26), en saillie axiale par rapport à la tête (22) de la tige ; dans lequel l'ouverture avant (120) du corps creux du nez de pose est apte à accueillir ledit élément de préhension ; et le premier élément mobile comprend un dispositif de maintien (114), apte à saisir l'élément de préhension.

9. Procédé de pose d'une fixation (12) comprenant une tige (16) s'étendant selon un axe de fixation et munie d'une tête (22), à l'aide d'un ensemble de pose selon l'une des revendications 6 à 8, le procédé comprenant les étapes suivantes :
- insertion de la tige (16) de la fixation dans un perçage (54) d'une structure, ledit perçage débouchant sur une face accessible (50) de ladite structure, la tête (22) de la tige étant disposée du côté de ladite face accessible ; appui axial de la lèvre (122) du corps creux (110) du nez de pose contre la structure ; et engagement du premier élément mobile (112, 114) du nez de pose avec la tige (16) de la fixation ; puis
- application sur l'outil (200) de pose d'un effort axial vers l'avant, de sorte à faire passer l'ensemble (10) de pose de la première configuration à la deuxième configuration ; puis
- fonctionnement du moteur (218) de l'outil de pose, de sorte à entraîner en rotation l'arbre de sortie (210), les premier (112, 114) et deuxième (206, 208) éléments mobiles étant ainsi entraînés en translation et/ou en rotation ; puis
- arrêt de l'effort axial vers l'avant sur l'outil de pose, de sorte à faire passer l'ensemble (10) de pose de la deuxième configuration à la première configuration.

10. Procédé de pose selon la revendication 9 prise en combinaison avec la revendication 7, dans lequel : la douille (30) de la fixation est insérée dans le perçage (54) de la structure simultanément à la tige (16) ; et lors de l'appui axial de la lèvre (122) du corps creux du nez de pose contre la structure, ladite lèvre du corps creux est au contact de la surface d'appui (46) de la collerette de la douille.

11. Procédé de pose selon la revendication 9 ou 10 prise en combinaison avec la revendication 8, dans lequel l'engagement du premier élément mobile (112, 114) du nez (100) de pose avec la fixation comprend la saisie, par le dispositif de maintien (114) du premier élément mobile, de l'élément de préhension (26) de la fixation.
